# EUROPEAN PATENT APPLICATION

(11) **EP 2 002 713 A2**
(43) Date of publication of application: **17.12.2008**
(21) Application number: 07118937.7
(22) Date of filing: 19.10.2007
(51) Int. Cl.: A01K 63/06

(54) **Aquarium lighting device**

(30) Priority: 11.06.2007 CN 200710111123
(71) Applicant: Prodisc Technology Inc., Taipei Hsien (TW)
(72) Inventor: Chen, Hon-Lun, Wu-Ku County, Taipei Hsien (TW); Teng, Kuo-Hsin, Wu-Ku County, Taipei Hsien (TW)
(74) Representative: 2K Patentanwälte Kewitz & Kollegen

(57) **Abstract**

An aquarium lighting device (2) is proposed which includes an illumination unit (21) and a control unit (22). The illumination unit (21) has a plurality of LEDs, i.e. light-emitting diodes (211). The LEDs (211) are disposed adjacent to each other and emit different colors of light. The control unit (22) is electrically connected with the LEDs (211) to control the LEDs.

## Description

### BACKGROUND OF THE INVENTION

### Field of Invention

The invention relates to an illumination device and, in particular, to an aquarium lighting device.

### Related Art

With the progresses of technologies, people start to pursue better living quality and thus have higher demands in functions and appearance of everyday objects. In particular, illumination devices such as incandescent lamps, desktop lamps, aquarium lamps, hanging lamps, wall lamps, or neon lights have become very popular.

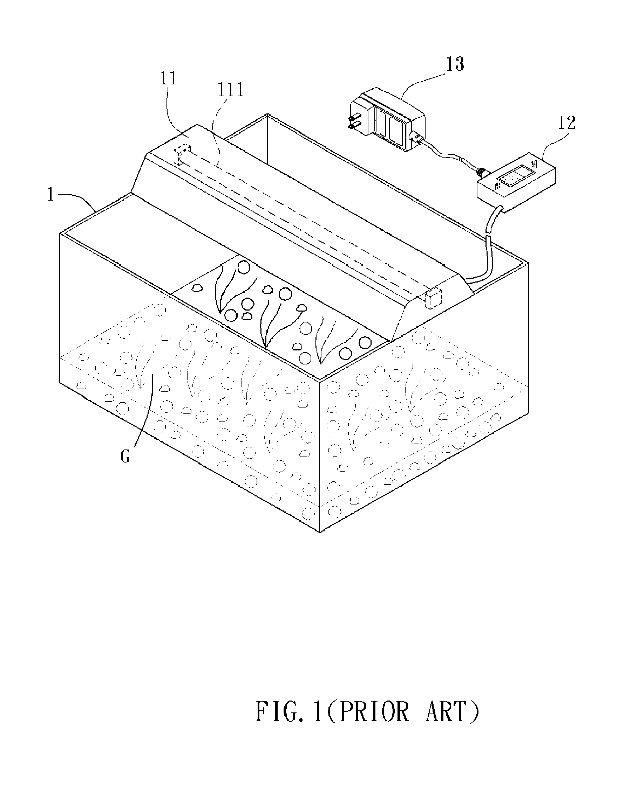

FIG. 1 shows the structure of a conventional aquarium 1, which has an aquarium lighting device 11. The user can decorate the aquarium 1 with aquatic weeds G to make it more beautiful. In this case, the aquarium lighting device 11 is an incandescent lamp 111. Besides, the aquarium 1 further has a switch 12 electrically connected with the aquarium 11 and an external power supply 13 to control the on/off of the aquarium lighting device 11.

However, when the season changes or the temperature changes too quickly or too much, the water temperature in the aquarium 1 also changes. Since the illumination intensity of the incandescent lamp 111 is limited and cannot be arbitrarily changed, it cannot increase the water temperature in the aquarium 1 and may affect the growth of the aquatic weeds G. Besides, the incandescent lamp 111 cannot provide choices of different colors of light with different wavelengths to speed up the growth of different aquatic weeds.

In other words, the illumination intensity of the conventional aquarium light device 11 is insufficient, and the intensity, color and spectrum thereof cannot be adjusted. Moreover, the incandescent lamp 111 has a shorter lifetime. Therefore, it needs to be replaced very often and inevitably increases the cost.

Therefore, it is an important subject to provide an aquarium light device that can adjust its lighting intensity and spectrum in an energy-efficient way and has a longer lifetime and lower cost.

### SUMMARY OF THE INVENTION

In view of the foregoing, the invention is to provide an aquarium light device that can adjust its lighting intensity and spectrum in an energy-efficient way and has a longer lifetime and lower cost.

To achieve the above, the invention discloses an aquarium lighting device including an illumination unit and a control unit. The illumination unit has a plurality of light-emitting diodes (LEDs) emitting different colors of light and disposed adjacent to each other. The control unit is electrically connected with the LEDs for controlling the LEDs.

As mentioned above, the aquarium lighting device of the invention uses LEDs as its light source. Compared with the related art, the LED has the advantages of low power consumption, long lifetime, good color saturation, high light-emitting efficiency, and adjustable color temperature. In addition to being free from frequent replacements, the LED also provides stable light, increases its usage rate, saves energy, and reduces the cost. Besides, the invention uses a control unit to control the LEDs emitting light of different colors, providing the user with different choices. Accordingly, the invention helps control the growth of aquatic weeds and produce changes to the aquarium.

### BRIEF DESCRIPTION OF THE DRAWINGS

The invention will become more fully understood from the detailed description and accompanying drawings, which are given for illustration only, and thus are not limitative of the present invention, and wherein:

FIG. 1 is a schematic view showing the structure of a conventional aquarium;

FIG. 2 is a schematic view showing the structure of a aquarium lighting device according to a preferred embodiment of the invention; and

FIGS. 3A to 3C are schematic views showing different aspects of the control unit.

### DETAILED DESCRIPTION OF THE INVENTION

The present invention will be apparent from the following detailed description, which proceeds with reference to the accompanying drawings, wherein the same references relate to the same elements.

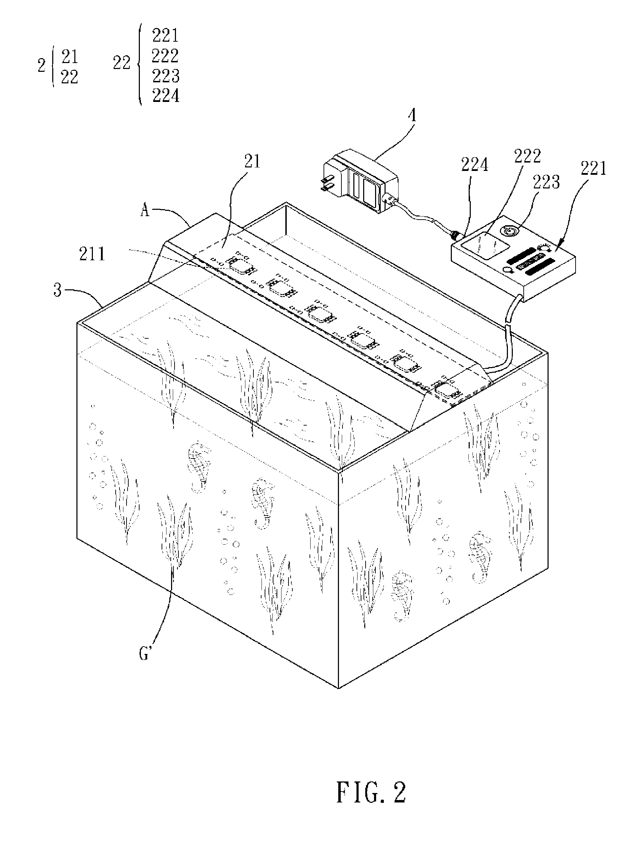

FIG. 2 shows the structure of an aquarium lighting device 2 according to a preferred embodiment of the invention. The aquarium lighting device 2 is disposed on an aquarium 3 for providing illumination. The aquarium lighting device 2 includes an illumination unit 21 and a control unit 22 that are electrically connected with each other. In this embodiment, the illumination unit 21 is disposed inside a shell A.

The illumination unit 21 provides the light for illumination. In the embodiment, the illumination unit 21 has several light emitting diodes (LEDs) 211 disposed on a circuit board 212. The LEDs 211 include at least one red LED, at least one green LED, at least one blue LED, or at least one yellow LED. Of course, the LEDs 211 can be any color or a mixture of several colors according to the user's need. The LEDs 211 are disposed adjacent to each other. LEDs 211 emit light of different colors that are mixed in different proportions to provide desired color light. Therefore, in addition to white light, light of different colors can be produced to achieve certain effects.

The control unit 22 has a brightness control area 221, a display area 222 and a switch 223. The brightness control area 221 is electrically connected with the circuit board 212 of the illumination unit 21 for adjusting the brightness, spectrum and color temperature of the LEDs 211 in the illumination unit 21. The control unit 22 can have different shape embodiments that are described below.

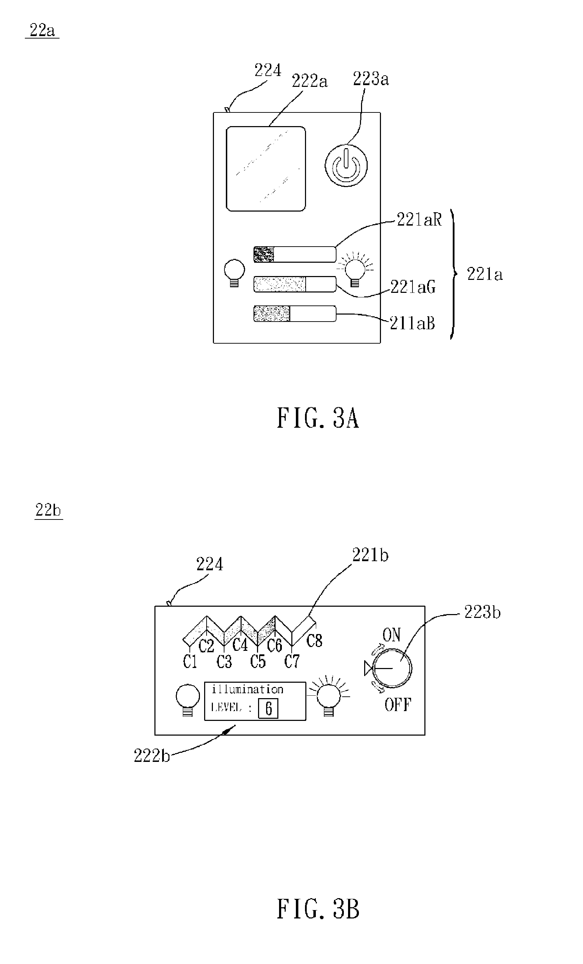

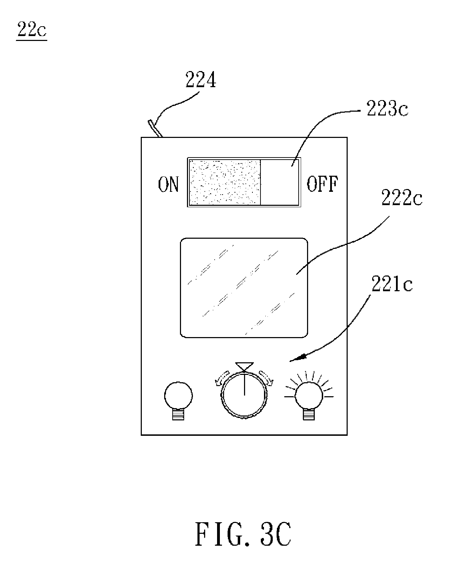

FIGS. 3A to 3C are schematic views of different aspects of the control unit 22 in FIG. 2. As shown in FIGS. 3A and 3B, the brightness control area 221a/221b of the control unit 22a/22b can be a touch-control panel. As shown in FIG. 3C, the brightness control area 221c of the control unit 22c can be a knob. In FIGS. 3A and 3B, when the brightness control area 221a/221b is a touch-control panel, the user can use a finger or a touch-control pen to touch the brightness control area 221a, 221b, thereby controlling the brightness and spectrum of the LEDs 211 in the illumination unit 21. In FIG. 3C, when the brightness control area 221c is a knob, the user can turn it to adjust the brightness, spectrum and color temperature of the LEDs 211 in the illumination unit 21.

The shape of the brightness control area 221 is not restricted by the invention. It can have a stripe shape (FIG. 3A), a saw shape (221b in FIG. 3B), a spiral shape (not shown), a circular shape (not shown), a W shape (not shown), a Z shape (not shown), an e shape (not shown), or some irregular shapes.

In FIG. 3A, the brightness control area 221a can have different brightness control ranges according to the LEDs 221 of different colors in the illumination unit 21. For example, the aquatic weeds require light of wavelengths between 435nm and 610nm for photosynthesis. Therefore, it is helpful to use LEDs emitting light of wavelengths 430nm, 555nm, and 630nm (R, G, and B). If the user wants to grow red aquatic weeds, blue and green light has to be enhanced. To grow green aquatic weeds, red and blue light has to be enhanced. As shown in FIG. 3A, the brightness control area 221a has a red brightness control area 221aR, a green brightness control area 221aG, and a blue brightness control area 221aB. The user can control the brightness of LEDs 221 of different wavelengths for different types of aquatic weeds G' in order to optimize their growth. Alternatively, as shown in FIG. 3B, the brightness control area 221b can represent the mixture brightness of the LEDs 211 of all colors. As shown in FIG. 3C, the brightness control area 221c can have a knob for controlling the brightness of the LEDs 211 of each color or the mixture brightness of all the LEDs 211.

To be noted, in addition to adjusting brightness, the control unit 22 can further adjust the color temperature of the LEDs 211 of different colors using a control circuit (not shown) that is in electrical connection with the circuit board 212 of the illumination unit 21. For example, the illumination unit 21 has LED series of red, green and blue colors. The LED series are connected in parallel via a resistor (not shown). The user can adjust the magnitudes of electrical currents flowing through the LED series by changing the resistance of the resistors.

For example, if a larger electrical current flows through the red LED series, then the brightness and color temperature of red color produced thereby is larger. On the other hand, if the electrically current flowing through the red LED series is smaller, the brightness and color temperature produced by the red LED series is lower. Therefore, the user can use the above method or other conventional circuit control method to control the LEDs or LED series of different colors in the illumination unit 21 for rendering different brightness and color temperature. This produces different effects in order to suit seasonal changes or personal tastes.

As shown in FIG. 3B, the brightness control area 221b is divided into several sections, each of which represents a distinct brightness level. Of course, the number of sections can be adjusted according to practical needs. This allows the user to readily determine the required brightness using the sections shown in the brightness control area 221b. The brightness can be touch-controlled as well.

For example, as showing in FIG. 3B, when the user wants to change the brightness from level 1 to level 6, he or she can touch the first section C1 in the brightness control area 221b and move to the sixth section C6, according to the definition of a circuit board (not sown) of the control unit 22b. In the embodiment, the brightness increases along the direction from the first section C1 to the sixth section C6. Alternatively, the user can touch any section in the brightness control area 221b and move a distance of five sections in the brightness control area 221b. This also changes the brightness of the illumination unit 21 from the original level 1 to level 6. Of course, the user can also directly touch the sixth section C6 in the brightness control area 221b to change the brightness to the sixth level. In other words, the user has several ways to change the brightness of the illumination unit 21 using the brightness control area 221b. Any other way of changing the brightness of the illumination unit 21 using the touch-control method should be construed as part of the invention.

Please refer to FIG. 2 again. The display area 222 is electrically connected with the illumination unit 21 for displaying the brightness level thereof. In particular, the display area 222 can be a liquid crystal display (LCD) panel (222a in FIG. 3A, 222b in FIG. 3B, and 222c in FIG. 3C), several light sources (not shown), or the combination of a display panel and LEDs (not shown). When the display area 222a/222c receives a change in the brightness of the illumination unit 21, as shown in FIGS. 3A or 3C, the brightness level of the illumination unit 21 is shown on the LCD panel. Alternatively, as shown in FIG. 3B, such brightness level can be represented by the number of LEDs that are turned on. Moreover, the display panel and the LEDs can be simultaneously used to show the brightness level of the illumination unit 21.

When the display area 222 is a display panel, the brightness level can be indicated by the color brightness (as shown in FIG. 3A) or by numbers (as shown in FIG. 3B). Of course, the display panel can use both methods at the same time. In other words, any method that uses the display panel to show the brightness level of the illumination unit 21 should be construed as part of the invention.

With reference to FIG. 2, the switch 223 is electrically connected with a power input terminal 224 of the control unit 22 in order to electrically connect with an external power supply 4. This controls the on and off of the aquarium lighting device 2. The switch 223 can be a touch-control switch (223a in FIG. 3A), a knob switch (223b in FIG. 3B), or a button switch (223c in FIG. 3C). Besides, the switch 223 can be disposed at any position.

The control unit 22 may further have a situation touch-control area (not shown). According to the type of the illumination unit 21, the situation touch-control area has several touch-control buttons (not shown) for different situations. For example, if the illumination unit 21 consists of several red, blue and green LEDs, then the situation touch-control area has an illumination situation button, a read situation button, a sleep situation button and a candle situation button. They use predetermined parameter values to mix light of different colors and brightness.

In summary, the aquarium lighting device of the invention uses LEDs as its light source. Compared with the related art, the LED has the advantages of low power consumption, long lifetime, good color saturation, high light-emitting efficiency, and adjustable color temperature. In addition to being free from frequent replacements, the LED also provides stable light, increases its usage rate, saves energy, and reduces the cost. Besides, the invention uses a control unit to control the LEDs emitting light of different colors, providing the user with different choices. Accordingly, the invention helps control the growth of aquatic weeds and produce changes to the aquarium.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. An aquarium lighting device (2), comprising:
an illumination unit (21), which has a plurality of light-emitting diodes (211) emitting different colors of light and disposed adjacent to each other; and
a control unit (22), which is electrically connected with the light-emitting diodes (211) for controlling the light-emitting diodes (211).

2. The aquarium lighting device (2) of claim 1, wherein the control unit (22; 22a/b/c) has a brightness control area (221), and the brightness control area (221a/b/c) is a touch-control panel or a knob.

3. The aquarium lighting device (2) of claim 2, wherein the brightness control area (221b) has a stripe shape, a circular shape, a saw shape, a spiral shape, a W shape, a Z shape, or an irregular shape.

4. The aquarium lighting device (2) of claim 1, wherein the control unit (22) has a display area (222) showing a brightness of the illumination unit (21).

5. The aquarium lighting device (2) of claim 1, wherein the control unit (22) has a switch (223) and the switch is a touch-control switch (223a), a button switch (223c), or a knob switch (223b).

6. The aquarium lighting device (2) of claim 1, wherein the control unit (22) has a power input terminal (224) for connecting with an external power supply (4).

7. The aquarium lighting device (2) of claim 1, wherein the light-emitting diodes (211) at least includes a red light-emitting diode, a green light-emitting diode or a blue light-emitting diode.

8. The aquarium lighting device (2) of claim 1, wherein the illumination unit (21) further comprises a circuit board (212), and the light-emitting diodes (211) are disposed on the circuit board (212).

9. The aquarium lighting device (2) of claim 1, wherein the control unit (22) has a control circuit for controlling a brightness of the light-emitting diodes (211).

10. The aquarium lighting device (2) of claim 1, wherein the control unit (22) has a control circuit for controlling a color temperature of the light-emitting diodes (211).
